# EUROPÄISCHE PATENTANMELDUNG

(11) **EP 1 589 319 A1**
(43) Veröffentlichungstag der Anmeldung: **26.10.2005**
(21) Anmeldenummer: 05008383.1
(22) Anmeldetag: 18.04.2005
(51) Int. Cl.: G01B 11/27

(54) **Vorrichtung und Verfahren zum Ermitteln der Geradheit oder relativen Orientierung hohlzylindrischer oder hohlkegeliger Körper**

(30) Priorität: 23.04.2004 DE 102004020406
(71) Anmelder: Prüftechnik Dieter Busch AG, 85737 Ismaning (DE)
(72) Erfinder: Lysen, Heinrich, 85748 Garching (DE)

(57) **Zusammenfassung**

Die Vermessung der Orientierung von hohlzylindrischen oder hohlkegligen Körpern relativ zueinander, oder der Lagen von Teilflächen auf solchen Körpern relativ zueinander, wird durch ein Geber- / Empfängersystem erleichtert, welches eine innerhalb des Hohlkörpers verschwenkbare Sende-/Empfangsvorrichtung sowie eine zugehörige unabhängig davon verschwenkbare Reflektor-/Empfangsvorrichtung aufweist. Mit beiden genannten Vorrichtungen wird zumindest eine, von der anderen unabhängige Verschwenkung durchgeführt. Zur Vermessung der Winkellage der genannten Vorrichtungen können elektronische Inclinometer Anwendung finden.

## Beschreibung

Die vorliegende Erfindung betrifft eine Vorrichtung und ein Verfahren zum Ermitteln der Geradheit an hohlzylindrischen und/oder hohlkegeligen Körpern, oder auch zum Ermitteln der räumlichen Orientierung (nach Azimut und Elevation) mehrerer hohlzylindrischer bzw. hohlkegeliger Körper relativ zueinander. Die Erfindung ist auch geeignet, die Orientierung oder Geradheit von hohlzylindrischen Sektoren oder Teilflächen zu bestimmen. Solche Körper oder Teilflächen sind zum Beispiel an Gleitlagerschalen, an Turbinengehäusen, oder an Schiffen zu finden.
Eine bekannte Vorrichtung zum Ermitteln der Ausrichtung von hohlzylindrischen Körpern ist beschrieben in der EP 0 543 971. Bei dieser wird eine Sendevorrichtung zum Aussenden eines Laserstrahls fest relativ zu dessen Oberfläche montiert. Der Lichtstrahl wird in axiale Richtung des Hohlzylinders ausgestrahlt. Ein zugehöriger Sensor zum Detektieren des Lichtstrahls wird in diversen Positionen entlang der Hohlzylinder-Achse um eben diese gedreht, also in tangentialer Richtung des Hohlzylinders oder einer Teilfläche davon. Nähere Details der Vorrichtung und des betreffenden Verfahrens sind aus der o.g. EP 0 543 97 zu entnehmen. Die Sendevorrichtung darf während der Messung nicht verschoben oder verlagert werden.

Eine andere Vorrichtung zum Ermitteln der Ausrichtung von hohlzylindrischen Körpern relativ zu einer raumfesten Referenzachse ist bekannt aus der DE 199 47 292. Präzis arbeitende Vorrichtungen solcher Art sind derzeit jedoch vergleichsweise kostspielig. Darüberhinaus können diese Vorrichtungen nur die winkelmäßige Orientierung von Hohlzylindern gegenüber Referenzrichtungen bestimmen, nicht jedoch zugehörige translatorischen Versatzmaße.

Eine weitere Vorrichtung zum Ermitteln der Ausrichtung von hohlzylindrischen Körpern relativ zu einer raumfesten Referenzfläche ist bekannt aus der DE 199 43 502. Diese Vorrichtung ist für vollständig hohlzylindrische Oberflächen gedacht und benötigt eine Empfangsfläche, die ausserhalb solcher hohlzylindrischer Oberflächen angebracht ist.

Aufgabe der Erfindung ist es, die Nachteile oder Einschränkungen des bekannten Standes der Technik zu mindern oder aufzuheben.
Diese Aufgabe wird durch eine Vorrichtung gelöst, welche zum Ermitteln der Geradheit von hohlzylinderförmigen Flächen bzw. Teilflächen davon, oder zum Ermitteln der räumlichen Orientierung mehrerer hohlzlyinderfömtiger Flächen oder Teilflächen in Bezug auf achsialen Parallelversatz und/oder Winkelversatz relativ zueinander geeignet ist, wobei die Vorrichtung ausgestattet ist mit
- einer im wesentlichen spielfrei über eine Hohlzylinderfläche oder -teilfläche schwenkbaren Sende-/ Empfangsvorrichtung zum Aussenden und Empfangen von Lichtstrahlen, welche mit einer Befestigungs- oder Abrollvorrichtung (18) an einem zugehörigen Gehäuse (12) ausgestattet ist und mindestens einen Sender zum Ausstrahlen von parallelen oder divergierenden Lichtstrahlen (19) und mindestens einen Empfänger (14) zum Empfangen und zur Vermessung der Einfallsposition von Lichtstrahlen solcher Art (29) aufweist
   und mit
- einer im wesentlichen spielfrei über eine Hohlzylinderfläche oder -teilfläche schwenkbaren Reflektor-/ Empfangsvorrichtung zum Empfangen und Reflektieren von Lichtstrahlen (19) der genannten Art, welche mit einer Befestigungs- oder Abrollvorrichtung (28) an einem zugehörigen Gehäuse (22) ausgestattet ist und mindestens ein teilreflektives optisches Element (26) zum partiellen Reflektieren von Lichtstrahlen (19) der genannten Art und mindestens einen Empfänger (24) zum Empfangen und zur Vermessung der Einfallsposition eines Anteils der Lichtstrahlen (19) der genannten Art aufweist
ausgestattet ist.

Die erfindungsgemäße Vorrichtung wird vorteilhafterweise mittels eines zugehörigen erfindungsgemäßen Verfahrens benutzt, welches typischerweise in folgend genannten Schritten ausgeführt wird:
- in einem ersten Schritt werden eine Sende-/ Empfangsvorrichtung 1 und eine Reflektor-/Empfangsvorrichtung 2 derartig auf die zu vermessenden hohlseitigen Teilflächen (10, 20) gesetzt, daß die zugehörigen Flächen einer Lichtaustrittsöffnung ( 16 ) und eines Reflektors ( 26 ) einander zugewandt sind
- in einem zweiten Schritt wird die Sende-/ Empfangsvorrichtung ( 1 ) im wesentlichen spielfrei und in tangentialer Richtung entlang der zugehörigen hohlseitigen Teiloberfläche verschwenkt, wobei
   - einerseits die Lage oder Positionsparameter der auf eine erste optoelektronisch wirkende Empfangsfläche (24) einfallenden Lichtstrahlen (19) fortlaufend und bevorzugt in Abhängigkeit von der Drehwinkellage (omega) der Sende-/ Empfangsvorrichtung erfaßt und verarbeitet oder gespeichert werden, wobei aufgrund der so erfaßten Daten die Lage eines ersten Kreiszentrums Größe relativ zum Gehäuse 22 ermittelt wird
   - andererseits zeitgleich die Lage oder Positionsparameter der auf eine zweite optoelektronisch wirkende Empfangsfläche (14) reflektierten Lichtstrahlen (29) fortlaufend und bevorzugt in Abhängigkeit von der Drehwinkellage (omega) der Sende-/Empfangsvorrichtung erfaßt und verarbeitet oder gespeichert werden, wobei aufgrund der so erfaßten Daten die Lage eines zweiten Kreiszentrums relativ zum Gehäuse 12ermittelt wird
- in einem dritten Schritt wird die Reßektor-/ Empfangsvorrichtung ( 2 ) im wesentlichen spielfrei und in tangentialer Richtung entlang der zugehörigen hohlseitigen Teiloberfläche verschwenkt, wobei
   - einerseits die Lage oder Positionsparameter der auf die erste optoelektronisch wirkende Empfangsfläche (24) einfallenden Lichtstrahlen (19) fortlaufend und bevorzugt in Abhängigkeit von der Drehwinkellage (pi) der Empfangsfläche (24) erfaßt und verarbeitet oder gespeichert werden wobei aufgrund der so erfaßten Daten die Lage eines dritten Kreiszentrums relativ zum Gehäuse 22 ermittelt wird
   - andererseits zeitgleich die Lage oder Positionsparameter der auf die zweite optoelektronisch wirkende Empfangsfläche (14) reflektierten Lichtstrahlen (29) fortlaufend und bevorzugt in Abhängigkeit von der Drehwinkellage (pi) der ersten Empfangsfläche (24) erfaßt und verarbeitet oder gespeichert werden wobei aufgrund der so erfaßten Daten die Lage eines vierten Kreiszentrums relativ zum Gehäuse 12 ermittelt wird
- in einem vierten Schritt wird anhand der ermittelten Werte der Koordinaten der Kreiszentren ( 150, 152 ) der Parallelversatz (in horizontaler und vertikaler Richtung) der den einzelnen hohlzylinder- oder hohlkegelförmigen Teilflächen zugeordneten Längsachsen ("Seelen") errechnet
- in einem fünften Schritt wird anhand der ermittelten Werte der Koordinaten der Kreiszentren (140, 142) der Winkelversatz (nach Azimut und Elevation) der den einzelnen hohlzylinder-oder hohlkegelförmigen Teilflächen zugeordneten Längsachsen ("Seelen") errechnet.

Die in der Erfindung verwendeten optoelektronischen Sensoren zum Detektieren des Auftreffortes eines Lichtstrahls sind gemäß aktuellem Stand der Technik an sich bekannt und können zum Beispiel positionssensierende Dioden sein, oder pixelorientierte Bildaufnehmer. Die Erfindung bedient sich bei der Bestimmung von Kreismittelpunkten und zugehöriger Radien an sich bereits bekannter mathematischer Verfahren. Solche Verfahren können allgemein auch solche sein, die die Parameter von Kegelschnitten ermitteln. Die genannten Verfahren können dabei Winkelinformationen hinsichtlich eines Verdrehwinkels eines Sensors (um eine zugehörige Hohlzylinder-Achse) in den Rechengang hineinnehmen. Sofern in mehr als drei Drehlagen von Sende- oder Empfangsvorrichtung die erforderliche Datenerfassung von Lichteinfallspositionen stattfindet, kann auf die Ermittlung und Verrechnung solcher Drehwinkel ggf. verzichtet werden. Typischerweise beinhalten solche mathematische Verfahren auch Methoden der Ausgleichsrechnung d.h. Ermittlung von Optimalwerten anhand Rechenvorschriften aus dem Gebiet der Statistik oder der numerischen Filterung und Glättung. Bei der Bestimmung der genannten Kreis-Parameter kann gemäß der Erfindung ein weiter verbessertes Ergebnis durch folgende Vorgehensweise ereicht werden: Da in den betreffenden Meßphasen auf den beiden Detektoren (Bezugsziffern 14 und 24) gleichzeitig Kreislinien erzeugt und beobachet werden, kann die Verwandtschaft dieser Kreislinien zueinander untersucht und ausgenutzt werden. Z.B. müssen die Bogenlängen der korrespondierenden d.h. gespiegelten Kreisbögen (in Grad oder Radian) identisch sein, und die zugehörigen Radien müssen einen konstanten Quotienten aufweisen. Aus diesem Grund kann eine verkoppelte Ausgleichsrechnung mit den Daten von zwei separat erfaßten Kreisbögen vorgenommen werden.
Von besonderem Vorteil ist es, daß zur Erfassung der gesuchten Meßwerte es lediglich erforderlich ist, eine erste Schwenkbewegung der Sende-/ Empfangsvorrichtung gefolgt von einer zweiten Schwenkbewegung der Reflektor-/ Empfangsvorrichtung durchzuführen.
Für die Erfassung der Ausrichtung von hohlkegeligen Oberflächen relativ zueinander, oder von einer hohlkegeligen Oberfläche relativ zu einer hohlzylindrischen Oberfläche, kann es erforderlich sein, spezielle Adapter vorzusehen, welche die Sende-/ Empfangsvorrichtung und die Reflektor-/ Empfangsvorrichtung in Nähe der Hohlkegel- bzw. der Hohlzylinder-Achsen bringen.
Sowohl die Sende-/ Empfangsvorrichtung als auch die Reflektor-/ Empfangsvorrichtung werden bevorzugt mittels Batterien oder Akkumulatoren bestromt, es kann aber auch eine Stromversorgung mittels zugehöriger externer Netzteile (nicht gezeigt) vorgesehen sein. Die von der Sende-/ Empfangsvorrichtung als auch von der Reflektor-/ Empfangsvorrichtung mittels einer jeweils eingebauten Elektronik erfaßten und ggf. vorverarbeiteten Daten werden bevorzugt an ein übergeordnetes Datenverarbeitungsgerät gesendet, entweder drahtlos oder über geeignete Datenkabel. Die Errechnung und Darstellung der interessierenden Meßresultate erfolgt bevorzugt mittels des genannten Datenverarbeitungsgerätes, welches z.B. ein tragbarer Computer oder ein sog. PDA (Personal Data Assistant) samt zugehöriger Software sein kann.

Die Erfindung wird im folgenden anhand der Zeichnung erläutert. - Es zeigt :
- Fig. 1: eine perspektivische Schema-Zeichnung von Sende-/ Empfangsvorrichtung und Reflektor-/ Empfangsvorrichtung in verschiedenen Meßpositionen verschiedener zu vermessender Hohlzylinder-Teilflächen
- Fig. 2: die geometrischen Verhältnisse für das Auftreffen eines Lichtstrahles auf eine erste Empfangsfläche bei tangentialer Verschiebung der Sendevorrichtung um eine zugehörige Hohlzylinder-Längsachse
- Fig. 3: die geometrischen Verhältnisse für auftreffende und reflektierte Lichtstrahlen auf erste und zweite Empfangsflächen sowie die Lage von vier zugehörigen Kreisbögen
- Fig. 4: die Lage der Zentren und Radien interessierender Kreisbögen auf dem Sensor oder der Empfangsfläche der Sende-/ Empfangsvorrichtung (14)
- Fig. 5: die Lage der Zentren und Radien interessierender Kreisbögen auf dem Sensor oder der Empfangsfläche der Reflektor-/ Empfangsvorrichtung (24)

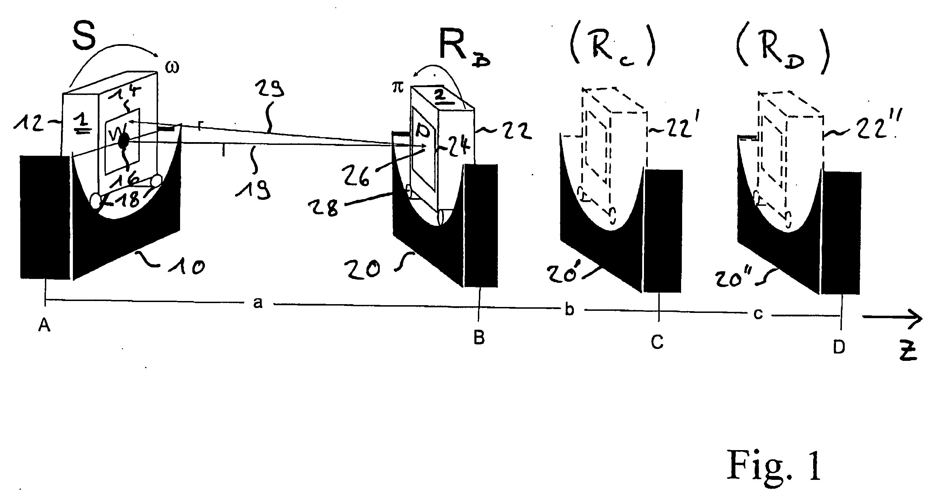

Wie in Fig. 1 in schematischer Form gezeigt, wird die Ausrichtung und/oder die Geradheit von hohlzylindrischen Flächen oder Teilflächen 10, 20, 20', 20 " mittels einer Sende-/Empfangsvorrichtung "S" (Bezugszeichen 12) und einer Reflektor-/ Empfangsvorrichtung "R" (Bezugszeichen 22) vorgenommen. Die hohlzylindrischen Flächen oder Teilflächen (im folgenden allgemein auch als "Hohlzylinder" bezeichnet) können dabei durchgängig sein, oder abschnittsweise in axialer Richtung des Hohlzylinders angeordnet sein, wie dies in Fig. 1 angedeutet ist. S bzw. R sind in axialer Richtung in einem Abstand "a" voneinander angeordnet. Die axiale Richtung des bzw. der hohlzylindrischen Flächen wird hier als z-Richtung bezeichnet.
Sowohl die Sende-/Emfpangsvorrichtung als auch die Reflektor-/ Empfangsvorrichtung sind mit Befestigungs- oder Abrollvorrichtungen 18 bzw. 28 ausgestattet, so daß sie im wesentlichen spielfrei über die zu vermessenden Hohlflächen verschwenkt werden können, und zwar um die zugehörigen Längsachsen dieser Flächen. Zu diesem Zweck ist es vorteilhaft, permanentmagnetisch wirkende Befestigungsvorrichtungen vorzusehen. Bei Bedarf können auch zugehörige Rollen vorgesehen werden, so daß die Schwenkbewegung mit geringerer Reibung durchgeführt werden kann. Der Schwenkwinkel (Drehpfeil omega) kann im Prinzip nahezu beliebig vorgegeben werden, sollte aber aus praktischen Gründen einen Wert von 20° nicht unterschreiten.
Die Sende-/ Empfangsvorrichtung weist sowohl eine Lichtstrahlen 19 aussendende Vorrichtung 16 auf, als auch eine optoelektronisch wirkende Empfangsfläche 14, welche zum Empfang reflektierter Lichtstrahlen 29 geeignet ist.
Der zunächst in Messposition "B" angeordnete Reflektor-/ Empfangsvorrichtung 22 kann dort ebenfalls um die Längsachse des Hohlzylinders 20 verschwenkt werden ( Schwenkwinkel pi) . Reflektor-/ Empfangsvorrichtung 22 weist ebenfalls eine optoelektronisch wirkende Empfangsfläche auf (Bezugszeichen 24). Anstelle einer aktiv Lichtstrahlen aussendenden Vorrichtung ist eine partiell reflektierende Oberfläche (halbdurchlässiger Spiegel) 26 vorgesehen. Diese befindet sich vor der Empfangsfläche 24 und reflektiert einen Teil des dort auftreffenden Lichtes, der verbleibende Teil des Lichtes gelangt auf die Empfangsfläche 24.
Zur Vermessung der Orientierung der Hohlzylinder 10, 20 ' relativ zueinander wird die Reflektor-/ Empfangsvorrichtung in Position "C" angesetzt. Auch in dieser Position werden die beiden Schwenkbewegungen um den Drehwinkel omega bzw. pi sukzessive durchgeführt. Das gleiche gilt für die Messung der Hohlzylinder 10, 20 " in Meßpositionen "A" bzw. "D"; etc.

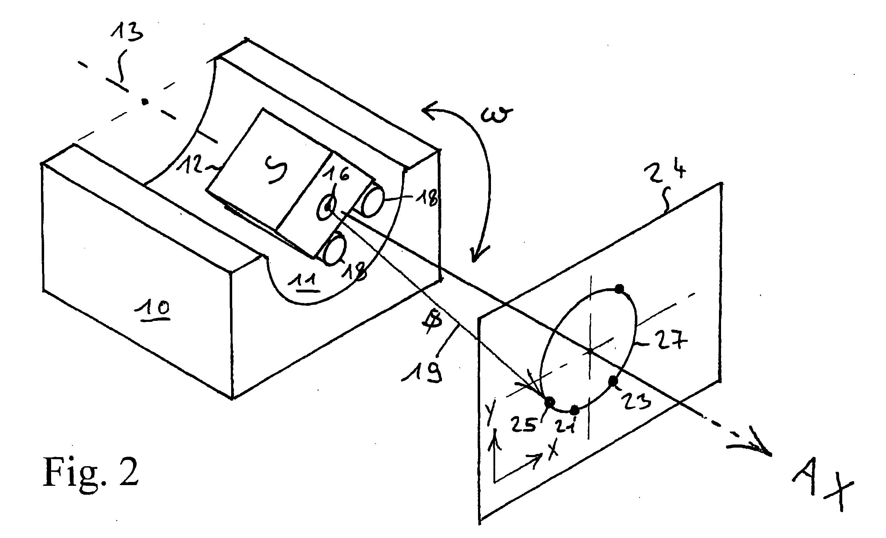

In Fig. 2 wird gezeigt, wie beim Verschwenken (Drehwinkel omega) der Sende-/Empfangsvorrichtung innerhalb des Hohlzylinders 10 um dessen Längsachse ("Seele") 13 die lichtemittierende Vorrichtung 16 (bevorzugt ein Laserlichtsender ) eine Fläche im Raum definiert, welche im Idealfall durch eine einzige Linie dargestellt wird, in der Praxis jedoch aufgrund von Fertigungsungenauigkeiten mehr oder weniger kegelmantelförmig ist. (Die genannte Form eines Kegelmantels bzw. Teile davon sind mathematisch exakt die Oberfläche eines Hyperboloides, was für besonders genaue Berechnungen berücksichtigt werden kann). Auf einer der lichtemittierenden Vorrichtung 16 gegenüberliegenden Empfangsfläche 24 wird bei Verschwenken der Sende-/ Empfangsvorrichtung gem. Fig. 2 also ein Kreis 27 mit Zentrum 150 und Radius 151 gezeichnet. Vgl. dortig gezeigte Punkte 21, 23, 25, welche bereits die Parameter dieses Kreises innerhalb und relativ zum Ursprung des gezeigten dortigen x-y-Koordinatensystems definieren, welches fest der Empfangsfläche 24 zugeordnet ist. Diese ist in der Lage, den Ort eines dort auftreffenden Lichtpunktes, z.B. 25, nach den genannten x-und y- Koordinaten zu sensieren und mittels elektrischer Signale an eine übergeordnete Auswerte-Einrichtung zu übertragen. Wie ersichtlich, definiert das Zentrum 150 des Kreises 27 somit den Durchstoßungspunkt der Längsachse 13 auf der Empfangsfläche 24.

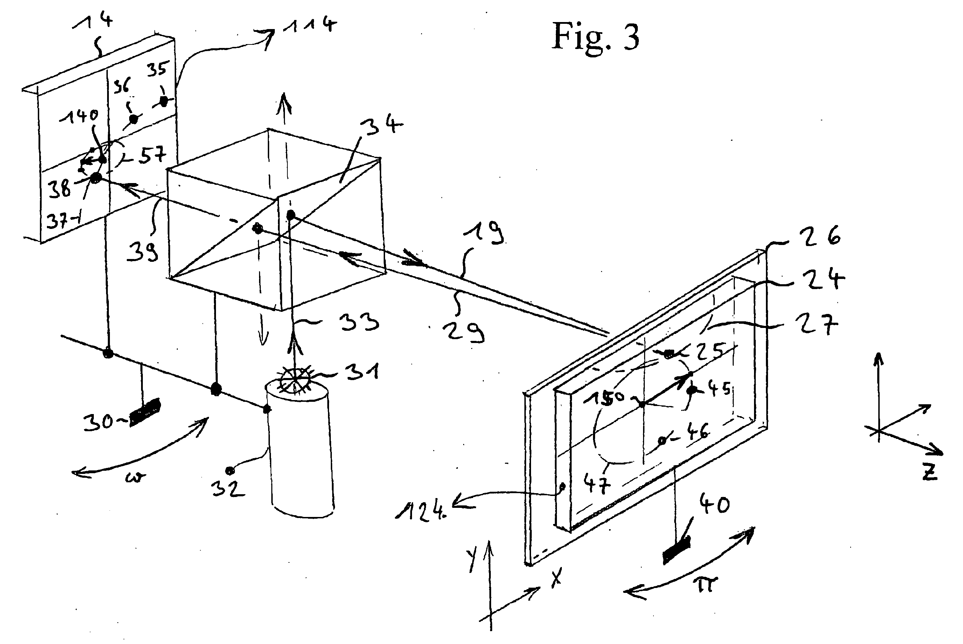

Gemäß der Erfindung sind zur Bestimmung des Parallelversatzes und des Winkelversatzes von zwei Hohlzylindern jedoch die Parameter von 4 Kreisen zu bestimmen, wie dies in Fig. 3 gezeigt wird. In der linken Hälfte der Fig. 3 sind die wesentlichen Bestandteile des Sende-/Empfangsvorrichtung zu sehen, nämlich eine Lichtquelle 31 (bevorzugt Laserlichtquelle), welche einen Lichtstrahl 33 aussendet, der an einem Strahlteiler 34 partiell reflektiert wird und dann als Lichtstrahl 19 in Richtung der Empfangsfläche 24 gesendet wird, weiterhin die Empfangsfläche 14 und deren elektrischer bzw. Signalanschluß 114. Lichtquelle 31, Strahlteiler 34 und Empfangsfläche 14 sind relativ zum umschließenden Gehäuse 12 (in Fig. 3 mit Bezugsziffer 30 symbolisiert) und relativ zueinander fest montiert. In der rechten Hälfte der Fig. 31 wird die Empfangsfläche 24 samt vorgelagertem teilreflektierenden optischen Element (halbdurchlässigem Spiegel) 26, dem fest zugeordneten dortigen x-y-Koordinatensystem sowie dem zugehörigen elektrischen bzw. Signalanschluß 124. (Das zugehörige Gehäuse 20 wird mit Bezugsziffer 40 symbolisiert.) Der gezeigte Lichtauftreffpunkt 25 wird bei Verschwenken der Sende-/ Empfangsvorrichtung um den Drehwinkel omega auf der Kreisbahn 27 geführt; vgl. Fig. 2. Die Bestimmung der Parameter (Lage des Zentrums und Radius) des Kreises 27 liefert eine erstes Werte-Paar zur Errechnung der Ausrichtung und Orientierung der Hohlzylinder 10, 20 (bzw. 20', 20 ") zueinander. - Für diese Errechnung sind jedoch zusätzlich die Werte-Paare von drei weiteren Kreisen zu ermitteln, wie dies im folgenden erläutert wird.
Bei stillstehender Reflektor-/ Empfangsvorrichtung wird wie bereits erwähnt ein Teil des Lichtstrahles 19 als Lichtstrahl 29 reflektiert, passiert den Strahlteiler 34 und trifft anteilig als Strahl 39 auf die Empfangsfläche 14 der Sende-/ Empfangsvorrichtung. Der dortige Auftreffpunkt ist mit Bezugsziffer 38 gekennzeichnet.
Bei Verschwenken der Sende-/ Empfangsvorrichtung um die zugehörige Seele des Hohlzylinders 10 wird bei stillstehendem Reflektor-/ Empfangsvorrichtung also nicht nur der Kreisbogen 27 auf der Empfangsfläche 24 gezogen, sondern es erscheint ein korrespondierender reflektierter Kreis 37 in vergrößerter Form auch auf der Empfangsfläche 14 der Sende-/ Empfangsvorrichtung . Es leuchtet ein, daß der reflektierte Kreis 37 etwa doppelten Durchmesser haben muß im Vergleich zum Kreis 27. Auch in diesem Falle gilt, daß durch die Positionsbestimmung von nur 3 Auftreffpunkten, z.B. 35, 36 und 38, die Parameter des Kreises 37 relativ zu einem x-y-Koordinatensystem der Empfangsfläche 14 vollständig bestimmt werden können.
Zur Bestimmung der Parameter zweier weiterer benötigter Kreise wird wie folgt vorgegangen: Bei unbewegter Sende-/ Empfangsvorrichtung wird in einem Folgeschritt sodann auch die Reflektor-/ Empfangsvorrichtung um die Längsachse des dort zu vermessenden Hohlzylinders verschwenkt (Drehpfeil pi ). Dies bewirkt dann zum einen die Erzeugung des Kreises 47 auf der Empfangsfläche 24, z.B. mit den gezeigten Auftreffpunkten 25, 45 und 46, welche das zugehörige Zentrum 152 samt Radius 153 definieren. Es versteht sich, daß in diesem wie auch in den anderen Fällen die Vermessung zusätzlicher Auftreffpunkte von Nutzen ist, da mittels Verwendung von Methoden der Ausgleichsrechung und bester Anpassungen eine präzisere Definition von Zentrum und Radius möglich ist. - Andererseits wird bei Verschwenken der Reflektor-/ Empfangsvorrichtung gleichzeitig ein wenn auch kleiner Kreis 57 auf der Empfangsfläche 14 gezogen, da auch in diesem Falle der partiell reflektierende Spiegel 26 einen Teil des dort auftreffenden Lichtes zurückwirft. Sofern die Flächennormale des partielell reflektierenden Spiegels 26 exakt parallel zur Längsachse des Hohlzylinders 20 ausgerichtet wäre, wären die Reflektionsbedingungen für die Auftreffpunkte 25, 45 und 46 identisch und der reflektierte Strahl 29 würde seine Lage während der Schwenkbewegung pi nicht verändern. Je nach Größe der fertigugnstechnisch bedingten Abweichungen von diesem idealzustand ergibt sich somit ein mehr oder weniger großer Kreis 57 auf der Empfangsfläche 14, dessen Mittelpunktskoordinaten (140) somit abschließend die benötigten Meßdaten vervollständigen.

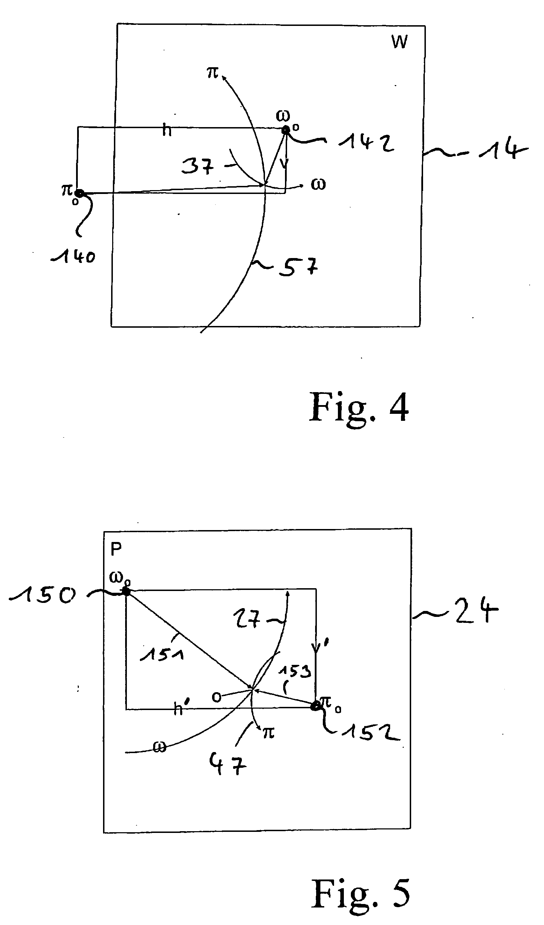

Die zugehörigen geometrischen Verhältnisse werden in Fig. 4 und 5 gezeigt. Fig. 4 stellt die Kreise und deren Bedeutung auf der Empfangsfläche 14 dar, während in Fig. 5 die Kreise und deren Relation zueinander auf der Empfangsfläche 24 der Reflektor-/ Empfangsvorrichtung dargestellt sind.

Sobald aufgrund der beobachteten Kreisbögen auf den Empfangsflächen 14, 24 die Lage der zugehörigen Kreiszentren ermittelt worden ist (diese Kreiszentren können sich durchaus auch außerhalb der Empfangsflächen befinden), ist gemäß Fig. 4 die Summe der horizontalen Projektionen "h" als Maß für die horizontale (azimutale) Winkelabweichung der Hohlzylinder und die Summe der vertikalen Projektionen "v" als direktes Maß für die vertikale (elevationsmäßige) Winkelabweichung der Hohlzylinder bekannt. Gleichzeitig ist gemäß Fig. 5 mit der Summe der horizontalen Projektionen h' der horizontale Parallelversatz der Sensoren und der zughörigen Hohlzylinder bekannt, während die Summe der vertikalen Prokektionen v' den vertikalen Parallelversatz der beteiligten Hohlzylinder ausweist.

Es ist von Vorteil, die Sende-/ Empfangsvorrichtung und Reflektor-/ Empfangsvorrichtung jeweils mit elektronischen Inclinometern auszustatten, um definierte Winkelgrößen der Gehäuse gegenüber der Vertikalen bzw. der Horizontalen angeben zu können.

## Patentansprüche

1. Vorrichtung zum Ermitteln der Geradheit von hohlzylinderförmigen Flächen bzw. Teilflächen davon, oder zum Ermitteln der räumlichen Orientierung mehrerer hohlzlyinderförmiger Flächen oder Teilflächen in Bezug auf achsialen Parallelversatz und/oder Winkelversatz relativ zueinander, mit
- einer im wesentlichen spielfrei über eine Hohlzylinderfläche oder -teilfläche schwenkbaren Sende-/ Empfangsvorrichtung zum Aussenden und Empfangen von Lichtstrahlen, welche mit einer Befestigungs- oder Abrollvorrichtung (18) an einem zugehörigen Gehäuse (12) ausgestattet ist und mindestens einen Sender zum Ausstrahlen von parallelen oder divergierenden Lichtstrahlen (19) und mindestens einen Empfanger (14) zum Empfangen und zur Vermessung der Einfallsposition von Lichtstrahlen solcher Art (29) aufweist
- einer im wesentlichen spielfrei über eine Hohlzylinderfläche oder -teilfläche schwenkbaren Reflektor-/ Empfangsvorrichtung zum Empfangen und Reflektieren von Lichtstrahlen (19) der genannten Art welche mit einer Befestigungs- oder Abrollvorrichtung (28) an einem zugehörigen Gehäuse (22) ausgestattet ist und mindestens einen teilreflektives optisches Element (26) zum partiellen Reflektieren von Lichtstrahlen (19) der genannten Art und mindestens einen Empfänger (24) zum Empfangen und zur Vermessung der Einfallsposition eines Anteils der Lichtstrahlen (19) der genannten Art aufweist.

2. Vorrichtung nach Anspruch 1, wobei die Sende-/ Empfangsvorrichtung und/oder die Reflektor-/ Empfangsvorrichtung mit einem elektronisch auslesbaren Inklinometer zur Erfassung der Drehlage des/der Gehäuse(s) (12, 22) ausgestattet ist.
